# EUROPEAN PATENT APPLICATION

(11) **EP 4 442 454 A1**
(43) Date of publication of application: **09.10.2024**
(21) Application number: 24152243.2
(22) Date of filing: 16.01.2024
(51) Int. Cl.: B32B 18/00, B28B 1/00, C04B 35/573, C04B 35/80

(54) **CERAMIC COMPOSITE TUBULAR STRUCTURE**

(30) Priority: 15.02.2023 US 202318169302
(71) Applicant: General Electric Company, Schenectady, NY 12345 (US)
(72) Inventor: HENSON, Grant Myron, Niskayuna, 12309 (US); DECESARE, Douglas Glenn, Niskayuna, 12309 (US)
(74) Representative: Openshaw & Co.

(57) **Abstract**

A ceramic composite tubular structure (10, 100, 200) includes a monolithic ceramic preform (40, 140, 240) being tubular-shaped created using an additive manufacturing process. The monolithic ceramic preform (40, 140, 240) includes a first end (24, 124, 224), a second end (26, 126, 226), an inner surface (42, 142, 242), and an outer surface (44, 144, 244). The monolithic ceramic preform (40, 140, 240) includes one or more apertures (50, 150, 250) formed between the inner surface (42, 142, 242) and the outer surface (44, 144, 244) where at least one of the one or more apertures (50, 150, 250) is open to at least one of the first end (24, 124, 224) or the second end (26, 126, 226). An inner face sheet (60, 160, 260) is formed on the inner surface of the monolithic ceramic preform (40, 140, 240) by a first quantity of ceramic matrix composite plies (64, 164, 264). An outer face sheet (62, 170, 262) is formed on the outer surface of the monolithic ceramic preform (40, 140, 240) by a second quantity of ceramic matrix composite plies (66, 182, 266).

## Description

### TECHNICAL FIELD

The present subject matter relates generally to components and processes of fabricating components, or more particularly to ceramic composite tubular structures.

### BACKGROUND

Silicon carbide (SiC)-based ceramic composite (CMC) materials have been proposed as materials for certain components of various types of propulsion devices. Various methods are known for fabricating SiC-based components, including melt infiltration (MI), chemical vapor infiltration (CVI), polymer inflation pyrolysis (PIP), and oxide/oxide methods. Though these fabrication techniques differ significantly from each other, each involves the use of hand lay-up and tooling or dies to produce a near-net-shape part through a method that includes the application of heat at various method stages.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic view of an exemplary ceramic composite tubular structure according to the present disclosure.
FIG. 2 is a close-up, schematic, view of a portion of the exemplary ceramic composite tubular structure of FIG. 1 according to the present disclosure.
FIG. 3 is a schematic view depicting exemplary passages formed in the ceramic composite tubular structure of FIG. 1 according to the present disclosure.
FIG. 4 is a schematic cross section view of a portion of the ceramic composite tubular structure of FIGS. 1-3 taken along the line 4-4 of FIG. 3 according to the present disclosure.
FIG. 5 is a schematic view of another exemplary ceramic composite tubular structure according to the present disclosure.
FIG. 6 is a schematic view of another exemplary ceramic composite tubular structure according to the present disclosure.
FIG. 7 is a flow diagram of an exemplary method of forming a ceramic composite tubular structure according to the present disclosure.

Corresponding reference characters indicate corresponding parts throughout the several views. The exemplifications set out herein illustrate exemplary embodiments of the disclosure, and such exemplifications are not to be construed as limiting the scope of the disclosure in any manner.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The following description is provided to enable those skilled in the art to make and use the described embodiments contemplated for carrying out the disclosure. Various modifications, equivalents, variations, and alternatives, however, will remain readily apparent to those skilled in the art. Any and all such modifications, variations, equivalents, and alternatives are intended to fall within the scope of the present disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

For purposes of the description hereinafter, the terms "upper", "lower", "right", "left", "vertical", "horizontal", "top", "bottom", "lateral", "longitudinal", and derivatives thereof shall relate to the disclosure as it is oriented in the drawing figures. However, it is to be understood that the disclosure may assume various alternative variations, except where expressly specified to the contrary. It is also to be understood that the specific devices illustrated in the attached drawings, and described in the following specification, are simply exemplary embodiments of the disclosure. Hence, specific dimensions and other physical characteristics related to the embodiments disclosed herein are not to be considered as limiting.

As used herein, the terms "first" and "second" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The singular forms "a", "an", and "the" include plural references unless the context clearly dictates otherwise.

As used herein, the terms "integral", "unitary", or "monolithic" as used to describe a structure refers to the structure being formed integrally of a continuous material or group of materials with no seams, connections, joints, or the like. The integral, unitary, or monolithic structures described herein may be formed through additive manufacturing to have the described structure, or alternatively through a ply layup process, etc. The integral, unitary, or monolithic structures as used herein denotes that the final component has a construction in which the integrated portions are inseparable and is different from a component comprising a plurality of separate component pieces that have been joined together but remain distinct and the single component is not inseparable (i.e., the pieces may be re-separated). Thus, unitary components may comprise generally substantially continuous pieces of material or may comprise a plurality of portions that are permanently bonded to one another. In any event, the various portions forming a unitary component are integrated with one another such that the unitary component is a single piece with inseparable portions.

As used herein, the term "composite material" refers to a material produced from two or more constituent materials, wherein at least one of the constituent materials is a non-metallic material. Example composite materials include polymer matrix composites (PMC), ceramic composites (CMC), chopped fiber composite materials, etc.

The present disclosure is generally related to a ceramic composite tubular structure, and a method for forming a ceramic composite tubular structure. In embodiments, the ceramic composite tubular structure may comprise a propulsion device (e.g., a thrust chamber assembly) for a rocket engine or other type of propulsion device. In embodiments, the ceramic composite tubular structure includes an additively manufactured (i.e., three-dimensional (3D) printed) monolithic ceramic precursor or preform in the form of a tubular-shaped cooling jacket having a number of cooling passages or channels formed therein. In embodiments, the monolithic ceramic precursor or preform includes a combustion chamber and a nozzle. The monolithic ceramic precursor or preform is burned out and melt-infiltrated. An inner wrap and outer wrap of ceramic matrix composite plies are disposed on the respective inner and outer surfaces of the monolithic ceramic precursor or preform, and the monolithic ceramic precursor or preform with inner and outer wraps is then burned out and melt-infiltrated to create a unitary thrust chamber assembly having walls comprising a sandwich construction featuring laminate composite face sheets and a monolithic core containing cooling passages of a size and shape suitable for specific component performance parameters.

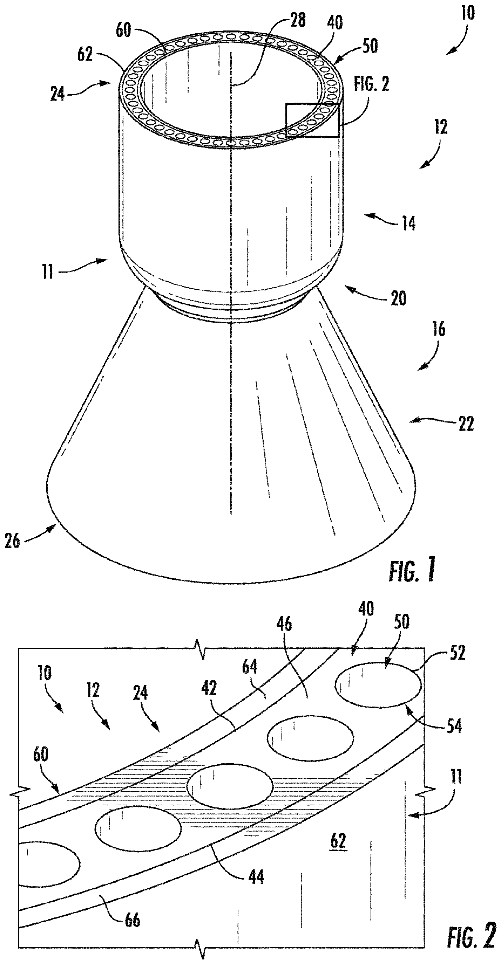

Referring now to the drawings, wherein identical numerals indicate the same elements throughout the figures, FIG. 1 is a schematic view of an exemplary ceramic composite tubular structure 10 according to the present disclosure, and FIG. 2 is a close-up, schematic, view of a portion of the exemplary ceramic composite tubular structure 10 of FIG. 1 according to the present disclosure. In the illustrated embodiment, the ceramic composite tubular structure 10 comprises ceramic composite propulsion device 11 in the form of a thrust chamber assembly 12 usable with a rocket engine or other type of propulsion device. However, it should be understood that other types of ceramic composite propulsion devices may be formed, and the ceramic composite tubular structure 10 may comprise other types of devices and be used in other applications.

In embodiments, the thrust chamber assembly 12 includes a combustion chamber 14 in fluid communication with a nozzle 16 formed as a unitary structure. However, it should be understood that the combustion chamber 14 and the nozzle 16 may be formed as separate components according to the present disclosure. In embodiments, the thrust chamber assembly 12 comprises an annular or tubular shell structure comprising an axisymmetric converging-diverging geometry. It should be understood that other tubular shell geometries (e.g., cylindrical tubes, conical tubes, rectangular tubes, etc.) can be fabricated without departing from the scope of the present disclosure, and other non-axisymmetric geometries can be fabricated without departing from the scope of the present disclosure. For example, the ceramic composite tubular structure 10 may comprise other geometries with varying cross-sectional shapes and areas. Thus, in the illustrated embodiment, the combustion chamber 14 includes a converging portion 20, and the nozzle 16 comprises a diverging portion 22. The thrust chamber assembly 12 includes an open forward end 24 and an open aft end 26, and the tubular shell structure of the thrust chamber assembly 12 defines a longitudinal axis 28 such that the combustion chamber 14 and the nozzle 16 comprise annular bodies coaxially located relative to the longitudinal axis 28.

In the exemplary embodiment illustrated in FIGS. 1 and 2, the ceramic composite tubular structure 10 includes a monolithic ceramic preform 40 created using an additive manufacturing process. Exemplary embodiments of the formation of monolithic ceramic preform 40 involve the use of additive manufacturing machines or methods. As used herein, the terms "additively manufactured" or "additive manufacturing techniques or processes" refer generally to manufacturing processes wherein successive layers of material(s) are provided on each other to "build-up," layer-by-layer, a three-dimensional component. The successive layers generally fuse together to form a monolithic component which may have a variety of integral sub-components. Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or manufacturing technology. For example, embodiments of the present disclosure may use layer-additive processes, layer-subtractive processes, or hybrid processes. In embodiments, a suitable additive manufacturing technique in accordance with the present disclosure includes 3D printing such as by binder jetting. However, it should be understood that other 3D printing techniques may be used. The additive manufacturing processes described herein may be used for forming components using any suitable material. For example, in embodiments, the material may be ceramics such as, but not limited to, aluminum oxide (alumina), zirconium oxide (zirconia), aluminum nitride, silicon carbide, and silicon nitride.

In addition, one skilled in the art will appreciate that a variety of materials and methods for bonding those materials may be used and are contemplated as within the scope of the present disclosure. As used herein, references to "fusing" may refer to any suitable process for creating a bonded layer of any of the above materials. For example, if the material is ceramic, the bond may be formed by a sintering process. One skilled in the art will appreciate that other methods of fusing materials to make a component by additive manufacturing are possible, and the presently disclosed subject matter may be practiced with those methods.

In addition, the additive manufacturing process disclosed herein allows a single component to be formed from multiple materials. Thus, the components described herein may be formed from any suitable mixtures of the above materials. For example, a component may include multiple layers, segments, or parts that are formed using different materials, processes, and/or on different additive manufacturing machines. In this manner, components may be constructed which have different materials and material properties for meeting the demands of any particular application. In addition, although components described herein are constructed entirely by additive manufacturing processes, it should be appreciated that in alternate embodiments, all or a portion of these components may be formed via casting, machining, and/or any other suitable manufacturing process. Indeed, any suitable combination of materials and manufacturing methods may be used to form these components.

An exemplary additive manufacturing process will now be described. Additive manufacturing processes fabricate components using three-dimensional (3D) information, for example a three-dimensional computer model, of the component. Accordingly, a three-dimensional design model of the component may be defined prior to manufacturing. In this regard, a model or prototype of the component may be scanned to determine the three-dimensional information of the component. As another example, a model of the component may be constructed using a suitable computer aided design (CAD) program to define the three-dimensional design model of the component.

The design model may include 3D numeric coordinates of the entire configuration of the component including both external and internal surfaces of the component. For example, the design model may define the body, the surface, and/or internal passageways such as openings, support structures, etc. In one exemplary embodiment, the three-dimensional design model is converted into a plurality of slices or segments, e.g., along a central (e.g., vertical) axis of the component or any other suitable axis. Each slice may define a thin cross section of the component for a predetermined height of the slice. The successive cross-sectional slices together form the 3D component. The component is then "built-up" slice-by-slice, or layer-by-layer, until finished. In this manner, the components described herein may be fabricated using the additive process, or more specifically each layer is successively formed. The build material may be formed by any suitable powder or material selected for enhanced strength, durability, and useful life, particularly at high temperatures.

Each successive layer may be, for example, between about 10 µm and 200 µm, although the thickness may be selected based on any number of parameters and may be any suitable size according to alternative embodiments. Therefore, utilizing the additive formation methods described above, the components described herein may have cross sections as thin as one thickness of an associated powder layer, e.g., 10 µm, utilized during the additive formation process.

In addition, when the additive manufacturing process is selective laser sintering (SLS), the surface finish and features of the components may vary as needed depending on the application. For example, the surface finish may be adjusted (e.g., made smoother or rougher) by selecting appropriate laser scan parameters (e.g., laser power, scan speed, laser focal spot size, etc.) during the additive process, especially in the periphery of a cross-sectional layer which corresponds to the part surface. For example, a rougher finish may be achieved by increasing laser scan speed or decreasing the size of the melt pool formed, and a smoother finish may be achieved by decreasing laser scan speed or increasing the size of the melt pool formed. The scanning pattern and/or laser power can also be changed to change the surface finish in a selected area.

Notably, in exemplary embodiments, several features of the components described herein were previously not possible due to manufacturing restraints. However, the present inventors have advantageously utilized current advances in additive manufacturing techniques to develop exemplary embodiments of such components generally in accordance with the present disclosure. While the present disclosure is not limited to the use of additive manufacturing to form these components generally, additive manufacturing does provide a variety of manufacturing advantages, including ease of manufacturing, reduced cost, greater accuracy, etc.

In this regard, utilizing additive manufacturing methods, even multi-part components may be formed as a single piece of continuous material, and may thus include fewer sub-components and/or joints compared to prior designs. The integral formation of these multi-part components through additive manufacturing may advantageously improve the overall assembly process. For example, the integral formation reduces the number of separate parts that must be assembled, thus reducing associated time and overall assembly costs. Additionally, existing issues with, for example, leakage, joint quality between separate parts, and overall performance may advantageously be reduced.

Also, the additive manufacturing methods described above enable much more complex and intricate shapes and contours of the components described herein. For example, such components may include thin additively manufactured layers and unique fluid passageways with integral mounting features. In addition, the additive manufacturing process enables the manufacture of a single component having different materials such that different portions of the component may exhibit different performance characteristics. The successive, additive nature of the manufacturing process enables the construction of these novel features. As a result, the components described herein may exhibit improved functionality and reliability.

The additive manufacturing processes referenced herein may be used for forming the monolithic ceramic preform 40 with one or more ceramic-based layers using any suitable ceramic particle compounds. In the illustrated embodiment, the monolithic ceramic preform 40 includes an inner surface 42 and an outer surface 44 defining a wall 46 of the monolithic ceramic preform 40. In the illustrated embodiment, the monolithic ceramic preform 40 comprises an annular or tubular shell structure comprising an axisymmetric converging-diverging geometry. It should be understood that other tubular shell geometries (e.g., cylindrical tubes, conical tubes, rectangular tubes, etc.) can be fabricated without departing from the scope of the present disclosure, and other non-axisymmetric geometries can be fabricated without departing from the scope of the present disclosure. Thus, in the illustrated embodiment, the monolithic ceramic preform 40 is formed having the converging portion 20, the diverging portion 22, the open forward end 24 and the open aft end 26 thereby forming the combustion chamber 14 and the nozzle 16 of the thrust chamber assembly 12 as a unitary structure. However, as indicated above, the combustion chamber 14 and the nozzle 16 may be formed as separate components (e.g., made from separate monolithic ceramic preforms 40).

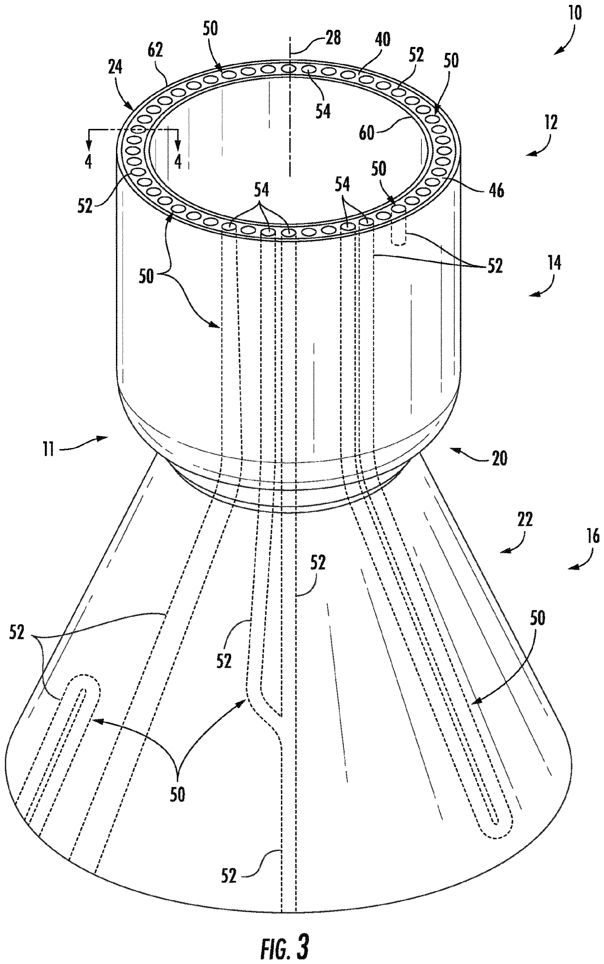

The exemplary monolithic ceramic preform 40 also includes one or more apertures 50 formed in the wall 46 of the monolithic ceramic preform 40 (e.g., disposed between the inner surface 42 and the outer surface 44 or extending between one or more of the inner surface 42 or the outer surface 44). The apertures 50 comprise one or more passages 52 or channels created during the additive manufacturing formation of the monolithic ceramic preform 40. For example, referring also to FIG. 3, FIG. 3 is a schematic view depicting one or more apertures 50 in the form of the one or more exemplary passages 52 formed in the ceramic composite tubular structure 10 of FIG. 1 according to the present disclosure. In embodiments, the passages 52 are cooling passages 52 forming cooling fluid passageways through or within the thrust chamber assembly 12. However, it should be understood that one or more of the passages 52 may be included in the monolithic ceramic preform 40 for purposes other than cooling fluid passageways (e.g., reducing the thickness of the wall 46 of the monolithic ceramic preform 40, reducing the mass of the monolithic ceramic preform 40, etc.). For example, in embodiments, one or more of the passages 52 have an open end 54 disposed at the forward end 24 of the monolithic ceramic preform 40 to enable a cooling fluid to enter or exit the passage(s) 52 and flow through the passage(s) 52. In embodiments, one or more of the passages 52 may have an open end at the aft end 26 of the monolithic ceramic preform 40 to enable the cooling fluid to pass therethrough. However, it should be understood that the passages 52 may be configured having a variety of configurations. For example, in embodiments, one or more of the passages 52 may intersect with one another between the forward end 24 and the aft end 26, one or more of the passages 52 may extend at least partially in a direction corresponding to the longitudinal axis 28 (e.g., from the forward end 24 toward the aft end 26, or vice versa) and then change directions, one or more of the passages 52 may comprise a loop such that an entrance and exit of such passage 52 may be at the same end of the monolithic ceramic preform 40 (e.g., having an entrance and exit at the forward end 24 or an entrance and exit at the at the aft end 26). Further, in embodiments, one or more of the passages 52 may have different cross-sectional geometries (e.g., area and/or shape), and one or more of the passages 52 may have a cross-sectional area that varies along the length thereof (e.g., a cross-sectional area varying continuously or non-continuously along a length thereof). Additionally, in embodiments, one or more of the passages 52 may be non-meridionally oriented (e.g., in a helical or similar pattern within the monolithic ceramic preform 40). In the illustrated embodiment, the apertures 50 are spaced equally apart from each other extending substantially about an entire circumference of the forward end 24 and having substantially the same cross-sectional geometry at the forward end 24. However, it should be understood that the placement, spacing, and geometry of each aperture 50 may vary.

In the illustrated embodiment, the ceramic composite tubular structure 10 includes an inner face sheet 60 formed on the inner surface 42 of the monolithic ceramic preform 40 and an outer face sheet 62 formed on the outer surface 44 of the monolithic ceramic preform 40. In embodiments, the inner face sheet 60 and the outer face sheet 62 comprise one or more ceramic composite (CMC) plies or materials. As used herein, ceramic-matrix-composite or "CMC" refers to a class of materials that include a reinforcing material (e.g., reinforcing fibers) surrounded by a ceramic matrix phase. Generally, the reinforcing fibers provide structural integrity to the ceramic matrix. Some examples of matrix materials of CMCs can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiOz), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) may also be included within the CMC matrix.

Some examples of reinforcing fibers of CMCs can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiOz), aluminosilicates such as mullite, or mixtures thereof), or mixtures thereof.

Generally, particular CMCs may be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs may include a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃·2SiO₂), as well as glassy aluminosilicates.

In certain embodiments, the reinforcing fibers may be bundled and/or coated prior to inclusion within the matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing and subsequent chemical processing to arrive at a component formed of a CMC material having a desired chemical composition. For example, the preform may undergo a cure or burn-out to yield a high char residue in the preform, and subsequent melt-infiltration with silicon, or a cure or pyrolysis to yield a silicon carbide matrix in the preform, and subsequent chemical vapor infiltration with silicon carbide. Additional steps may be taken to improve densification of the preform, either before or after chemical vapor infiltration, by injecting it with a liquid resin or polymer followed by a thermal processing step to fill the voids with silicon carbide. CMC material as used herein may be formed using any known or hereinafter developed methods including but not limited to melt infiltration, chemical vapor infiltration, polymer impregnation pyrolysis (PIP), or any combination thereof.

Such materials, along with certain monolithic ceramics (i.e., ceramic materials without a reinforcing material), are particularly suitable for higher temperature applications. Additionally, these ceramic materials are lightweight compared to superalloys, yet can still provide strength and durability to the component made therefrom. Therefore, such materials are applicable for many aerospace propulsion and structural applications where a high strength-to-weight ratio at high operating temperatures is desirable.

In embodiments according to the present disclosure, the monolithic ceramic preform 40 functions as a mandrel such that a quantity of CMC plies 64 are laid up on the inner surface 42 and a quantity of CMC plies 66 are laid up on outer surface 44 and processed as described herein (e.g., undergoing thermal and/or chemical processing) to form the inner face sheet 60 and/or the outer face sheet 62, respectively. In embodiments, the inner face sheet 60 and the outer face sheet 62 extend from the forward end 24 to the aft end 26 such that the inner face sheet 60 and the outer face sheet 62 terminate coincident with the upstream and downstream ends or edges of the monolithic ceramic preform 40. In the illustrated embodiment, the inner face sheet 60 and the outer face sheet 62 substantially surrounds the monolithic ceramic preform 40 such that the inner face sheet 60 and the outer face sheet 62 are in contact with the respective inner surface 42 and the outer surface 44. As used herein, the terms "substantially surround" and "substantially surrounding" means that the inner surface 42 and the outer surface 44 have at least 90% of their surface areas covered by the respective inner face sheet 60 and outer face sheet 62, such as 95% of its surface area covered by the respective inner face sheet 60 and outer face sheet 62. The terms "substantially surround" and "substantially surrounding" may include completely surrounds and completely surrounding, respectively. Additionally, in embodiments, the reinforcing fibers of the CMC plies 64 and CMC plies 66 may be oriented in an annular direction corresponding to the annular orientation of the inner face sheet 60 and the outer face sheet 62. However, it should be understood that the CMC plies 64 and CMC plies 66 may applied to the monolithic ceramic preform 40 such that the orientation of the reinforcing fibers of the CMC plies 64 and CMC plies 66 may be otherwise configured.

In embodiments, the monolithic ceramic preform 40 resulting from the additive manufacturing process is burned out and melt-infiltrated prior to the application of the CMC plies 64 and CMC plies 66 to the monolithic ceramic preform 40. For example, in embodiments, the monolithic ceramic preform 40 comprises a SiC monolithic ceramic preform 40 such that, after 3D printing, the monolithic ceramic preform 40 is a combination of SiC and C. During melt infiltration of the monolithic ceramic preform 40, Si is applied to the monolithic ceramic preform 40 and, during melt infiltration, Si infiltrates the monolithic ceramic preform 40. The Si reacts with the C in the monolithic ceramic preform 40 during melt infiltration to form new, additional SiC and consolidates the monolithic ceramic preform 40 (e.g., forming a monolithic ceramic core).

In embodiments, after melt-infiltration of the monolithic ceramic preform 40, the CMC plies 64 and CMC plies 66 are applied to the monolithic ceramic preform 40. The CMC plies 64 and CMC plies 66 may undergo densification (e.g., melt infiltration with the monolithic ceramic preform 40). Thus, in this embodiment, a silicon-based matrix material is applied to the CMC plies 64 and/or CMC plies 66 forming the respective inner face sheet 60 and outer face sheet 62, and the monolithic ceramic preform 40, such that the monolithic ceramic preform 40 and the CMC plies 64 and/or CMC plies 66 forming the respective inner face sheet 60 and outer face sheet 62 are burned out and undergo a melt infiltration process together. As a result, the inner face sheet 60 and/or outer face sheet 62 form a seamless, integrated unitary structure with the monolithic ceramic preform 40.

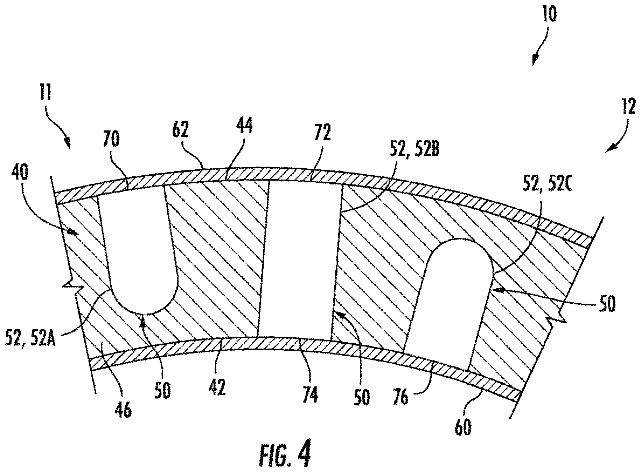

In embodiments, one or more of the apertures 50 formed in the ceramic composite tubular structure 10 may comprise a closed aperture 50 (i.e., not having an open end or being open to an exterior area of the ceramic composite tubular structure 10). For example, referring to FIG.4, FIG. 4 is a schematic cross section view of a portion of the monolithic ceramic preform 40 of FIGS. 1-3 taken along the line 4-4 of FIG. 3 according to the present disclosure. In FIG. 4, three apertures 50 are depicted in the form of three passages 52 (e.g., passages 52A, 52B, and 52C); however, it should be understood that a greater or fewer quantity of passages 52 having configurations such as passages 52A, 52B or 52C may be included in the monolithic ceramic preform 40. In the illustrated embodiment, each of the passages 52A, 52B or 52C comprise a closed passage 52A, 52B or 52C. For example, in the illustrated embodiment, the passage 52A includes an open end 70 located on the outer surface 44 of the monolithic ceramic preform 40, the passage 52B includes an open end 72 located on the outer surface 44 of the monolithic ceramic preform 40 and an open end 74 located on the inner surface 42 of the monolithic ceramic preform 40, and the passage 52C includes an open end 76 located on the inner surface 42 of the monolithic ceramic preform 40. In the illustrated embodiment, each of the passages 52A, 52B or 52C extend transversely within the monolithic ceramic preform 40 relative to the longitudinal axis 28 (FIGS. 1 and 3). For example, in the illustrated embodiment, the passage 52A extends inwardly from the outer surface 44 toward the inner surface 42, passage 52B extends from the inner surface 42 to the outer surface 44, and passage 52C extends outwardly from the inner surface 42 towards the outer surface 44. However, it should be understood that the passages 52A, 52B or 52C may be formed at any orientation and have any desired geometry in the monolithic ceramic preform 40. In the illustrated embodiment, while the passages 52A, 52B and 52C may initially be open passages 52A, 52B and 52C (e.g., open to one or more of the inner surface 42 or the outer surface 44 of the monolithic ceramic preform 40), the passages 52A, 52B and 52C become closed passages 52A, 52B and 52C (forming closed apertures 50) in response to the application of the inner face sheet 60 and the outer face sheet 62 to the monolithic ceramic preform 40. For example, as illustrated in FIG. 4, the inner face sheet 60 covers the ends 74 and 76, and the outer face sheet 62 covers the ends 70 and 72, thereby resulting in the passages 52A, 52B, and 52C no longer having open ends 70, 72, 74, and 76. Although in the illustrated embodiment, each of the ends 70, 72, 74, and 76 are closed by the respective inner face sheet 60 and the outer face sheet 62, it should be understood that passages 52 similar to the passages 52A, 52B and 52C may be formed in the monolithic ceramic preform 40 without being closed (e.g., one or more of the passages 52A, 52B, or 52C being open to either or both of the inner surface 42 or the outer surface 44 such that the inner face sheet 60 or the outer face sheet 62 does not cover a corresponding end 70, 72, 74, or 76).

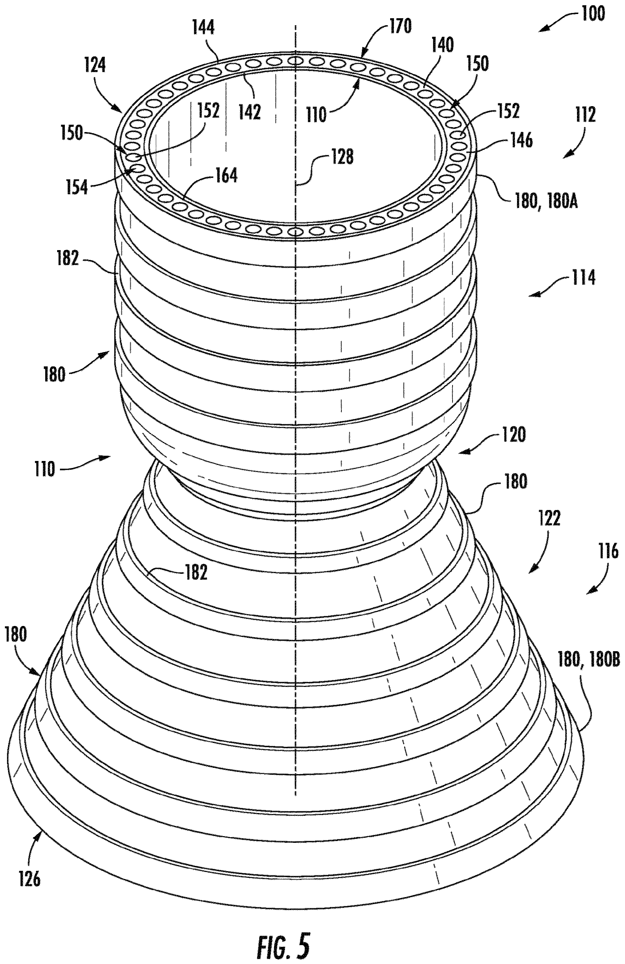

Referring to FIG. 5, FIG. 5 is a schematic view of another exemplary ceramic composite tubular structure 100 according to the present disclosure. The ceramic composite tubular structure 100 may be formed similarly to the ceramic composite tubular structure 10 (FIGS. 1-4) having a monolithic ceramic preform 140 created using an additive manufacturing process. As indicated above, exemplary embodiments of the formation of monolithic ceramic preform 140 involve the use of additive manufacturing machines or methods (e.g., manufacturing processes wherein successive layers of material(s) are provided on each other to "build-up," layer-by-layer, a three-dimensional component (e.g., referred sometimes as a three-dimensional printing process, an additive printing process, and the like)). The successive layers generally fuse together to form a monolithic component which may have a variety of integral sub-components.

Similar to the ceramic composite tubular structure 10 (FIGS. 1-4), the ceramic composite tubular structure 100 may comprise a ceramic composite propulsion device 110, such as, but not limited to, a thrust chamber assembly 112, similar to the thrust chamber assembly 12 of FIGS. 1-4, usable with a rocket engine or other type of propulsion device. However, it should be understood that the ceramic composite tubular structure 100 may be configured for other types of devices and used in other applications.

Accordingly, the thrust chamber assembly 112 includes a combustion chamber 114 in fluid communication with a nozzle 116. In the illustrated embodiment, the combustion chamber 114 and the nozzle 116 are formed as a unitary structure. However, it should be understood that combustion chamber 114 and the nozzle 116 may be formed as separate components without departing from the scope of the present disclosure. In the illustrated embodiment, the thrust chamber assembly 112 comprises an annular or tubular shell structure comprising an axisymmetric converging-diverging geometry. It should be understood that other tubular shell geometries (e.g., cylindrical tubes, conical tubes, rectangular tubes, etc.) can be fabricated without departing from the scope of the present disclosure, and it should be understood that other non-axisymmetric geometries may be formed without departing from the scope of the present disclosure. Thus, in the illustrated embodiment, the combustion chamber 114 includes a converging portion 120, and the nozzle 116 comprises a diverging portion 122. The thrust chamber assembly 112 includes an open forward end 124 and an open aft end 126, and the tubular shell structure of the thrust chamber assembly 112 defines a longitudinal axis 128 such that the combustion chamber 114 and the nozzle 116 comprise annular bodies coaxially located relative to the longitudinal axis 128.

Similar to the exemplary monolithic ceramic preform 40 (FIGS. 1-4), the exemplary monolithic ceramic preform 140 also includes an inner surface 142 and an outer surface 144 defining a wall 146 of the monolithic ceramic preform 140. Similar to the exemplary monolithic ceramic preform 40 (FIGS. 1-4), the exemplary monolithic ceramic preform 140 also includes one or more apertures 150 formed in the wall 146 of the monolithic ceramic preform 140 (e.g., disposed between the inner surface 142 and the outer surface 144 or extending to at least one of the inner surface 142 or the outer surface 144). The apertures 150 comprise one or more passages 152 or channels created during additive manufacturing of the monolithic ceramic preform 140. The passages 152 may comprise cooling passages 152 forming cooling fluid passageways through or within the thrust chamber assembly 112. For example, in embodiments, one or more of the passages 152 have an open end 154 disposed at the forward end 124 of the monolithic ceramic preform 140 to enable a cooling fluid to enter or exit the passage(s) 152 and flow through the passage(s) 152. In embodiments, one or more of the passages 152 may have an open end at the aft end 126 of the monolithic ceramic preform 140 to enable the cooling fluid to pass therethrough. However, it should be understood that the passages 152 may be configured having a variety of configurations. For example, in embodiments, similar to the illustrated passages 52 of FIGS. 3 and 4, one or more of the passages 152 may intersect with one another between the forward end 124 and the aft end 126, one or more of the passages 152 may extend at least partially in a direction corresponding to the longitudinal axis (e.g., from the forward end 124 toward the aft end 126, or vice versa) and then change directions, one or more passages 152 may comprise a loop such that an entrance and exit of such passage 152 may be at the same end of the monolithic ceramic preform 140 (e.g., having an entrance and exit at the forward end 124). Further, in embodiments, one or more of the passages 152 may have different cross-sectional geometries (e.g., area and/or shape), and one or more of the passages 152 may have a cross-sectional area that varies along the length thereof (e.g., cross-sectional area varying continuously or non-continuously along a length thereof). Additionally, in embodiments, one or more of the passages 152 may be non-meridionally oriented (e.g., in a helical or similar pattern around the monolithic ceramic preform 140). Further, one or more of the passages 152 may be closed passages such as the passages 52A, 52B, and 52C depicted in FIG. 4.

In the illustrated embodiment, the ceramic composite tubular structure 100 includes an inner face sheet 160 formed on the inner surface 142 of the monolithic ceramic preform 140. In embodiments, the inner face sheet 160 comprises one or more CMC plies. For example, as indicated above, CMC materials generally comprise a ceramic fiber reinforcement material embedded in a ceramic matrix material. The reinforcement material may be discontinuous short fibers that are randomly dispersed in the matrix material or continuous fibers or fiber bundles oriented within the matrix material.

In embodiments according to the present disclosure, the monolithic ceramic preform 140 functions as a mandrel such that a quantity of CMC plies 164 are laid up on the inner surface 142 and processed as described herein (e.g., undergoing thermal and/or chemical processing) to form the inner face sheet 160. In embodiments, the inner face sheet 160 extends from the forward end 124 to the aft end 126 such that the inner face sheet 160 terminates coincident with the upstream and/or downstream ends or edges of the monolithic ceramic preform 140.

In the illustrated embodiment, the ceramic composite tubular structure 100 includes an outer face sheet 170 formed on the outer surface 144 of the monolithic ceramic preform 140. In the illustrated embodiment, the outer face sheet 170 comprises a plurality of spaced apart face sheet bands 180 formed on the outer surface 144 of the monolithic ceramic preform 140. For example, in embodiments, each face sheet band 180 comprises one or more CMC plies 182. As indicated above, CMC materials generally comprise a ceramic fiber reinforcement material embedded in a ceramic matrix material. The reinforcement material may be discontinuous short fibers that are randomly dispersed in the matrix material or continuous fibers or fiber bundles oriented within the matrix material.

In embodiments according to the present disclosure, the monolithic ceramic preform 140 functions as a mandrel such that a quantity of the CMC plies 182 are laid up on the outer surface 144 and processed as described herein (e.g., undergoing thermal and/or chemical processing) to form each respective face sheet band. In the illustrated embodiment, each face sheet band 180 comprises an annular face sheet band 180 extending a desired distance in the longitudinal direction of the monolithic ceramic preform 140. It should be understood that the quantity of CMC plies 182, the width (in the longitudinal direction) of each face sheet band 180, the spacing between the face sheet bands 180, and the orientation of each face sheet band 180 may vary to provide a desired level of structural strength and integrity to the thrust chamber assembly 112. In the illustrated embodiment, the ceramic composite tubular structure 100 is formed such that face sheet bands 180 are located coincident with the forward end 124 and the aft end 126 of the monolithic ceramic preform 140 (e.g., a face sheet band 180A located at the forward end 124 and terminating coincident with the upstream edge of the monolithic ceramic preform 140, and a face sheet band 180B located at the aft end 126 and terminating coincident with the downstream edge of the monolithic ceramic preform 140). Additionally, in embodiments, the reinforcing fibers of the CMC plies 164 and/or CMC plies 182 may be oriented in an annular direction corresponding to the annular orientation of the inner face sheet 60 and the face sheet bands 180 or may be oriented at any angle with respect to the inner surface 142 or the outer surface 144 of the monolithic ceramic preform 140.

As described above in connection with the ceramic composite tubular structure 10 (FIGS. 1-4), the monolithic ceramic preform 140 of the ceramic composite tubular structure 100 is burned out and melt-infiltrated in a similar manner as that described above in connection with the monolithic ceramic preform 40 (FIGS. 1-4). After melt infiltration of the monolithic ceramic preform 140, the CMC plies 164 and CMC plies 182 are applied to the monolithic ceramic preform 140. In embodiments, the CMC plies 164 and CMC plies 182 may undergo densification (e.g., melt infiltration (MI)) with the monolithic ceramic preform 140. Thus, in this embodiment, a silicon-based matrix material is applied to the CMC plies 164 and CMC plies 182 forming the respective inner face sheet 160 and outer face sheet 170, and the monolithic ceramic preform 140, such that the monolithic ceramic preform 140 and the CMC plies 164 and CMC plies 182 forming the respective inner face sheet 160 and outer face sheet 170 together undergo a melt infiltration process. As a result, the inner face sheet 160 and the outer face sheet 170 form a seamless, integrated unitary structure with the monolithic ceramic preform 140.

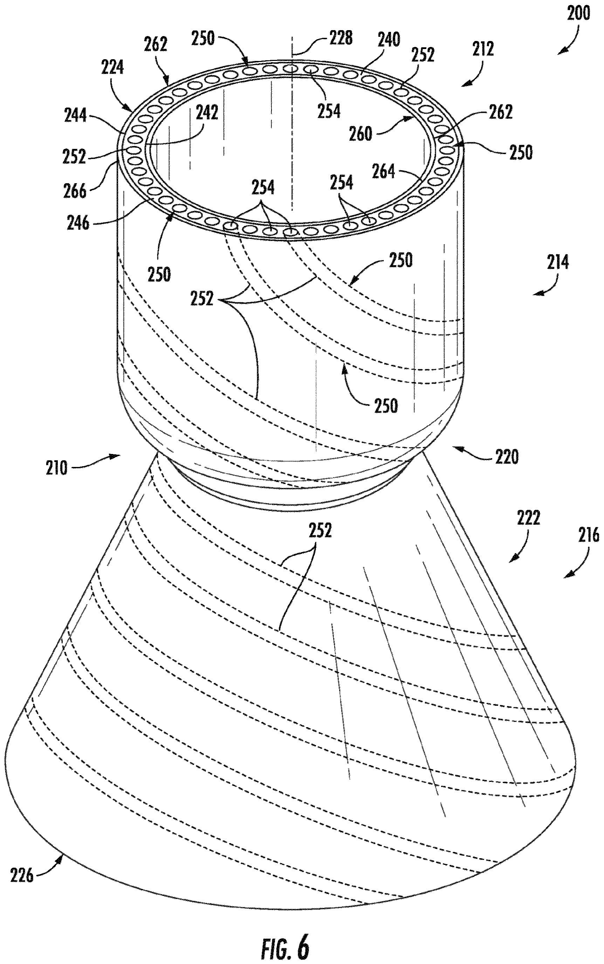

FIG. 6 is a schematic view of another exemplary ceramic composite tubular structure 200 according to the present disclosure. The ceramic composite tubular structure 200 may be formed similarly to the ceramic composite tubular structure 10 (FIGS. 1-4) or the ceramic composite tubular structure 100 (FIG. 5). For example, in the illustrated embodiment, the ceramic composite tubular structure 200 includes a monolithic ceramic preform 240 created using an additive manufacturing process. As indicated above, exemplary embodiments of the formation of monolithic ceramic preform 240 involve the use of additive manufacturing machines or methods (e.g., manufacturing processes wherein successive layers of material(s) are provided on each other to "build-up," layer-by-layer, a three-dimensional component (e.g., referred sometimes as a three-dimensional printing process, an additive printing process, and the like)). The successive layers generally fuse together to form a monolithic component which may have a variety of integral sub-components.

Similar to the ceramic composite tubular structure 10 (FIGS. 1-4) or the ceramic composite tubular structure 100 (FIG. 5), the ceramic composite tubular structure 200 may be used for a ceramic composite propulsion device 210 such as, but not limited to, a thrust chamber assembly 212, similar to the thrust chamber assembly 12 of FIGS. 1-4 or the thrust chamber assembly 112 of FIG. 5, usable with a rocket engine or other type of propulsion device. However, it should be understood that the ceramic composite tubular structure 200 may be configured or used for other types of devices and used in other applications.

Accordingly, the thrust chamber assembly 212 includes a combustion chamber 214 in fluid communication with a nozzle 216. In the illustrated embodiment, the combustion chamber 214 and the nozzle 216 are formed as a unitary structure. However, it should be understood that that combustion chamber 214 and the nozzle 216 may be formed as separate components without departing from the scope of the present disclosure. In the illustrated embodiment, the ceramic composite tubular structure 200 comprises an annular or tubular shell structure comprising an axisymmetric converging-diverging geometry. It should be understood that other tubular shell geometries (e.g., cylindrical tubes, conical tubes, rectangular tubes, etc.) can be fabricated without departing from the scope of the present disclosure, and it should be understood that other non- axisymmetric geometries may be formed without departing from the scope of the present disclosure. Thus, in the illustrated embodiment, the combustion chamber 214 includes a converging portion 220, and the nozzle 216 comprises a diverging portion 222. The thrust chamber assembly 212 includes an open forward end 224 and an open aft end 226, and the tubular shell structure of the thrust chamber assembly 212 defines a longitudinal axis 228 such that the combustion chamber 214 and the nozzle 216 comprise annular bodies coaxially located relative to the longitudinal axis 228.

Similar to the exemplary monolithic ceramic preform 40 (FIGS. 1-4) or the exemplary monolithic ceramic preform 140 (FIG. 5), the exemplary monolithic ceramic preform 240 also includes an inner surface 242 and an outer surface 244 defining a wall 246 of the monolithic ceramic preform 240. Similar to the exemplary monolithic ceramic preform 40 (FIGS. 1-4) or the exemplary monolithic ceramic preform 140 (FIG. 5), the exemplary monolithic ceramic preform 240 also includes one or more apertures 250 formed in the wall 246 of the monolithic ceramic preform 240 (e.g., disposed between the inner surface 242 and the outer surface 244 or extending to at least one of the inner surface 242 or the outer surface 244). The apertures 250 comprise one or more passages 252 or channels created during additive manufacturing of the monolithic ceramic preform 240. The passages 252 may comprise cooling passages 252 forming cooling fluid passageways through or within the thrust chamber assembly 212. For example, in embodiments, one or more of the passages 252 have an open end 254 disposed at the forward end 224 of the monolithic ceramic preform 240 to enable a cooling fluid to enter or exit the passage(s) 252 and flow through the passage(s) 252. In embodiments, one or more of the passages 252 may have an open end at the aft end 226 of the monolithic ceramic preform 140 to enable the cooling fluid to pass therethrough. However, it should be understood that the passages 252 may be configured having a variety of configurations. In the illustrated embodiment, the apertures 250 are helically formed to create one or more helical passages 252 extending about the monolithic ceramic preform 240. In the illustrated embodiment, the helically-formed passages 252 extend from the forward end 224 to the aft end 226. However, as described above in connection with the monolithic ceramic preform 40 (FIGS. 1-4) or the monolithic ceramic preform 140 (FIG. 5), it should be understood that the apertures 250 may have other configurations (e.g., lopped, intersection, closed, etc.).

In the illustrated embodiment, the ceramic composite tubular structure 200 includes an inner face sheet 260 formed on the inner surface 242 of the monolithic ceramic preform 240, and an outer face sheet 262 formed on the outer surface 244 of the monolithic ceramic preform 240. Similar to the ceramic composite tubular structure 10 (FIGS. 1-4) or the ceramic composite tubular structure 100 (FIG. 5), the inner face sheet 260 comprises a quantity of CMC plies 264 laid up on the inner surface 242, and the outer face sheet 262 comprises a quantity of CMC plies 266 laid up on outer surface 244. In the illustrated embodiment, the inner face sheet 260 and the outer face sheet 262 extend from the forward end 224 to the aft end 226. However, it should be understood that the inner face sheet 260 and the outer face sheet 262 may be otherwise configured (e.g., the outer face sheet formed as a plurality of spaced apart face sheet bands, such as the face sheet bands 180 (FIG. 5).

As described above in connection with the ceramic composite tubular structure 10 (FIGS. 1-4) and the ceramic composite tubular structure 100 (FIG. 5), the monolithic ceramic preform 240 is burned out and melt-infiltrated in a similar manner as that described above in connection with the monolithic ceramic preform 40 (FIGS. 1-4) or the monolithic ceramic preform 140 (FIG. 5). After melt infiltration of the monolithic ceramic preform 240, the CMC plies 264 and CMC plies 266 are applied to the monolithic ceramic preform 240. In embodiments, the CMC plies 264 and CMC plies 266 may undergo densification (e.g., melt infiltration (MI)) with the monolithic ceramic preform 240. Thus, in this embodiment, a silicon-based matrix material is applied to the CMC plies 264 and the CMC plies 266 forming the respective inner face sheet 260 and outer face sheet 262, and the monolithic ceramic preform 240, such that the monolithic ceramic preform 240 and the CMC plies 264 and CMC plies 266 forming the respective inner face sheet 260 and outer face sheet 262 together undergo a melt infiltration process. As a result, the inner face sheet 260 and the outer face sheet 262 form a seamless, integrated unitary structure with the monolithic ceramic preform 240.

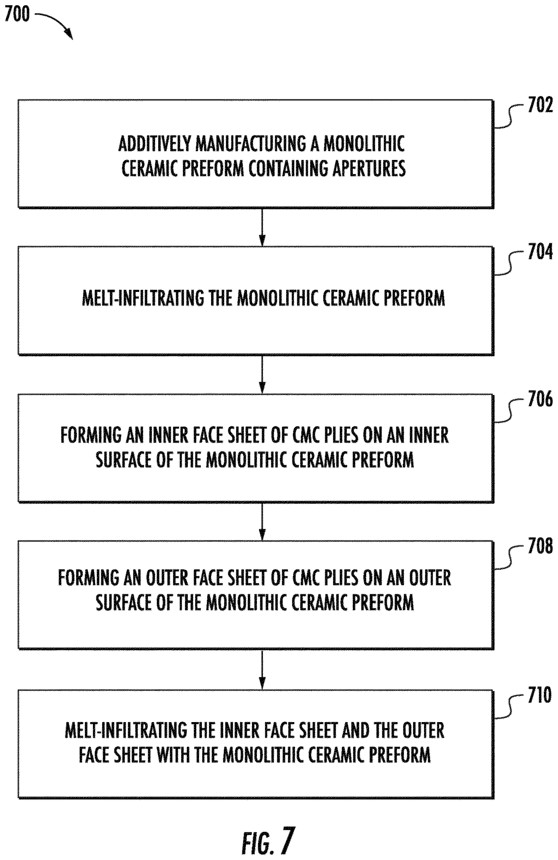

FIG. 7 provides a flow diagram of an exemplary method (700) of forming a ceramic composite tubular structure in accordance with exemplary embodiments of the present disclosure. For instance, the exemplary method (700) may be utilized for forming the ceramic composite tubular structure 10, the ceramic composite tubular structure 100, or the ceramic composite tubular structure 200 described herein. It should be appreciated that the method (700) is discussed herein only to describe exemplary aspects of the present subject matter and is not intended to be limiting.

At (702), the method (700) includes additively manufacturing a monolithic ceramic preform (e.g., the monolithic ceramic preform 40, 140, or 240) containing one or more apertures (e.g., apertures 50, 150, or 250). At (704), the method (700) includes melt-infiltrating the monolithic ceramic preform (e.g., the monolithic ceramic preform 40, 140, or 240). At (706), the method (700) includes forming an inner face sheet (e.g., inner face sheet 60, 160, or 260) on the inner surface (e.g., the inner surface 42, 142, or 242) of the monolithic ceramic preform (e.g., the monolithic ceramic preform 40, 140, or 240) using a quantity of CMC plies (e.g., the CMC plies 64, 164, or 264). At (708), the method (700) includes forming an outer face sheet (e.g., the outer face sheet 62, 170, or 262) on the outer surface (e.g., the outer surface 44, 144, or 244) of the monolithic ceramic preform (e.g., the monolithic ceramic preform 40, 140, or 240) using a quantity of CMC plies (e.g., the CMC plies 66, 182, or 266). At (710), the method (700) includes melt-infiltrating the inner face sheet (e.g., inner face sheet 60, 160, or 260) and the outer face sheet (e.g., outer face sheet 62, 170, or 262) with the monolithic ceramic preform (e.g., the monolithic ceramic preform 40, 140, or 240).

Thus, embodiments of the present disclosure provide a ceramic composite tubular structure, and a method for forming a ceramic composite tubular structure, having an additively manufactured ceramic monolithic core wrapped with inner and outer CMC face sheets. The ceramic monolithic core is wrapped on its inner and outer surfaces with CMC material, burned out, and melt-infiltrated to create a unitary ceramic composite tubular structure. In a thrust chamber assembly application, the ceramic monolithic core includes cooling passages of a size and shape that can be optimized for specific performance parameters. Additionally, because the ceramic monolithic core is created using additive manufacturing techniques, the ceramic monolithic core may be formed with varying shapes and/or sizes, such as with converging and diverging sections, to accommodate a respective combustion and nozzle sections for a thrust assembly application. The ceramic monolithic core may include apertures formed therein during the additive manufacturing process to provide mass reduction, wall thickness variations, cooling fluid passageways, etc., to accommodate particular design requirements.

Although specific features of various embodiments may be shown in some drawings and not in others, this is for convenience only. In accordance with the principles of the present disclosure, any feature of a drawing may be referenced and/or claimed in combination with any feature of any other drawing.

Further aspects of the disclosure are provided by the subject matter of the following clauses:

A ceramic composite tubular structure, comprising: a monolithic ceramic preform being tubular-shaped and created using an additive manufacturing process, the monolithic ceramic preform having a first end and a second end, the monolithic ceramic preform comprising an inner surface and an outer surface with one or more apertures formed between the inner surface and the outer surface, at least one of the one or more apertures open to at least one of the first end or the second end; an inner face sheet formed on the inner surface of the monolithic ceramic preform, the inner face sheet comprising a first quantity of ceramic matrix composite plies; and an outer face sheet formed on the outer surface of the monolithic ceramic preform, the outer face sheet comprising a second quantity of ceramic matrix composite plies.

The ceramic composite tubular structure of the preceding clause, wherein at least one of the one or more apertures comprise a continuously varying cross-sectional geometry over a length of the at least one of the one or more apertures.

The ceramic composite tubular structure of any preceding clause, wherein the monolithic ceramic preform comprises an annular monolithic ceramic preform.

The ceramic composite tubular structure of any preceding clause, wherein the one or more apertures comprises a first aperture and a second aperture, wherein the first aperture intersects the second aperture.

The ceramic composite tubular structure of any preceding clause, wherein the monolithic ceramic preform comprises a converging portion and a diverging portion.

The ceramic composite tubular structure of any preceding clause, wherein the monolithic ceramic preform comprises at least one of a converging portion or a diverging portion.

The ceramic composite tubular structure of any preceding clause, wherein the outer face sheet comprises a plurality of spaced apart face sheet bands.

The ceramic composite tubular structure of any preceding clause, wherein a silicon mixture is melt infiltrated into the monolithic ceramic preform, the inner face sheet, and the outer face sheet.

The ceramic composite tubular structure of any preceding clause, wherein the one or more apertures comprise a first aperture and a second aperture, wherein the first aperture has a cross sectional geometry different than a cross sectional geometry of the second aperture.

The ceramic composite tubular structure of any preceding clause, wherein reinforcing fibers of the first quantity of ceramic matrix composite plies and the second quantity of ceramic matrix composite plies are disposed in an annular direction corresponding to an annular orientation of the inner face sheet and the outer face sheet.

The ceramic composite tubular structure of any preceding clause, wherein the one or more apertures comprises at least one closed aperture.

The ceramic composite tubular structure of any preceding clause, wherein the monolithic ceramic preform comprises a thrust chamber assembly having at least one of a combustion chamber or a nozzle.

The ceramic composite tubular structure of any preceding clause, wherein the monolithic ceramic preform, the inner face sheet, and the outer face sheet form a propulsion device.

The ceramic composite tubular structure of any preceding clause, wherein the propulsion device is in the form of a rocket engine thrust chamber assembly.

A method of forming a ceramic composite tubular structure, comprising: forming a monolithic ceramic preform being tubular-shaped using an additive manufacturing process, the monolithic ceramic preform comprising a first end and a second end, the monolithic ceramic preform having an inner surface and an outer surface with one or more apertures formed between the inner surface and the outer surface, at least one of the one or more apertures open to at least one of the first end or the second end; applying an inner face sheet on the inner surface of the monolithic ceramic preform, the inner face sheet comprising a first quantity of ceramic matrix composite plies; and applying an outer face sheet on the outer surface of the monolithic ceramic preform, the outer face sheet comprising a second quantity of ceramic matrix composite plies.

The method of forming the ceramic composite tubular structure of any preceding clause, further comprising using the monolithic ceramic preform as a mandrel for laying up the first quantity of ceramic matrix composite plies and the second quantity of ceramic matrix composite plies.

The method of forming the ceramic composite tubular structure of any preceding clause, wherein forming the monolithic ceramic preform comprises forming an annular monolithic ceramic preform.

The method of forming the ceramic composite tubular structure of any preceding clause, wherein forming the monolithic ceramic preform comprises forming at least one of the one or more apertures having a varying cross-sectional geometry.

The method of forming the ceramic composite tubular structure of any preceding clause, wherein applying the outer face sheet comprises applying a plurality of spaced apart face sheet bands.

The method of forming the ceramic composite tubular structure of any preceding clause, further comprising melt infiltrating a silicon mixture into the monolithic ceramic preform, the inner face sheet, and the outer face sheet.

The method of forming the ceramic composite tubular structure of any preceding clause, further comprising forming the monolithic ceramic preform to include a combustion chamber and a nozzle.

The method of forming the ceramic composite tubular structure of any preceding clause, further comprising forming the monolithic ceramic preform to include a converging portion and a diverging portion.

The method of forming the ceramic composite tubular structure of any preceding clause, further comprising: melt infiltrating a silicon mixture into the monolithic ceramic preform; applying the first quantity of ceramic matrix composite plies to the melt-infiltrated monolithic ceramic preform; applying the second quantity of ceramic matrix composite plies to the melt-infiltrated monolithic ceramic preform; and melt infiltrating the silicon mixture into the melt-infiltrated monolithic ceramic preform together with the first quantity of ceramic matrix composite plies and the second quantity of ceramic matrix composite plies.

The method of forming the ceramic composite tubular structure of any preceding clause, further comprising forming the monolithic ceramic preform to include at least one of a converging portion or a diverging portion.

The method of forming the ceramic composite tubular structure of any preceding clause, further comprising orienting reinforcing fibers of the first quantity of ceramic matrix composite plies and the second quantity of ceramic matrix composite plies in an annular direction corresponding to an annular orientation of the inner face sheet and the outer face sheet.

The method of forming the ceramic composite tubular structure of any preceding clause, further comprising forming at least one of the one or more apertures with a continuously varying cross-sectional geometry along a length of the at least one of the one or more apertures.

The method of forming the ceramic composite tubular structure of any preceding clause, further comprising forming at least one of the one or more apertures as a loop.

The method of forming the ceramic composite tubular structure of any preceding clause, further comprising forming at least one of the one or more apertures as a closed aperture.

A ceramic composite tubular structure, comprising: a monolithic ceramic preform created using an additive manufacturing process, the monolithic ceramic preform being tubular-shaped and having a first end and a second end and defining at least one of a converging portion or a diverging portion, the monolithic ceramic preform comprising an inner surface and an outer surface extending between the first end and the second end, the monolithic ceramic preform having one or more passages formed between the inner surface and the outer surface; an inner face sheet formed on the inner surface of the monolithic ceramic preform, the inner face sheet comprising a first quantity of ceramic matrix composite plies; and an outer face sheet formed on the outer surface of the monolithic ceramic preform, the outer face sheet comprising a second quantity of ceramic matrix composite plies.

The ceramic composite tubular structure of any preceding clause, wherein at least one of the one or more passages comprises a varying cross-sectional geometry over a length of the at least one of the one or more passages.

The ceramic composite tubular structure of any preceding clause, wherein the outer face sheet comprises a plurality of spaced apart face sheet bands.

The ceramic composite tubular structure of any preceding clause, wherein the inner face sheet extends from the first end to the second end.

The ceramic composite tubular structure of any preceding clause, wherein at least one of the one or more passages forms a closed passage.

The ceramic composite tubular structure of any preceding clause, wherein the plurality of passages comprise a first passage and a second passage, the first passage comprising a cross sectional geometry different than a cross sectional geometry of the second passage.

A thrust chamber assembly, comprising: a monolithic ceramic preform having at least one of a combustion chamber or a nozzle, the monolithic ceramic preform created using an additive manufacturing process, the monolithic ceramic preform comprising an inner surface and an outer surface defining a wall therebetween, wherein one or more apertures are formed within the wall of the monolithic ceramic preform during additive manufacturing process; an inner face sheet formed on the inner surface of the monolithic ceramic preform, the inner face sheet comprising a first quantity of ceramic matrix composite plies; and an outer face sheet formed on the outer surface of the monolithic ceramic preform, the outer face sheet comprising a second quantity of ceramic matrix composite plies.

The thrust chamber assembly of the preceding clause, wherein the monolithic ceramic preform is tubular-shaped.

The thrust chamber assembly of the preceding clause, wherein the monolithic ceramic preform comprises a plurality of apertures formed between the inner surface and the outer surface.

The thrust chamber assembly of any preceding clause, wherein the one or more apertures comprise one or more cooling channels.

The thrust chamber assembly of any preceding clause, wherein at least one of the one or more apertures intersects another one of the one or more apertures.

The thrust chamber assembly of any preceding clause, wherein the monolithic ceramic preform comprises a forward end and an aft end, and wherein the inner face sheet extends from the forward end to the aft end.

The thrust chamber assembly of any preceding clause, wherein the monolithic ceramic preform comprises a forward end and an aft end, and wherein the outer face sheet extends from the forward end to the aft end.

The thrust chamber assembly of any preceding clause, wherein at least two of the one or more apertures have different cross-sectional geometries.

The thrust chamber assembly of any preceding clause, wherein at least one of the apertures comprises a loop.

The thrust chamber assembly of any preceding clause, wherein the outer face sheet comprises a plurality of face sheet bands.

The thrust chamber assembly of any preceding clause, wherein the outer face sheet comprises a plurality of spaced apart face sheet bands.

The thrust chamber assembly of any preceding clause, wherein the outer face sheet comprises a plurality of spaced apart, annular face sheet bands.

The thrust chamber assembly of any preceding clause, wherein reinforcing fibers of the first quantity of ceramic matrix composite plies and the second quantity of ceramic matrix composite plies are disposed in an annular direction corresponding to an annular orientation of the inner face sheet and the outer face sheet.

The thrust chamber assembly of any preceding clause, wherein at least one of the one or more apertures is a closed aperture.

The thrust chamber assembly of any preceding clause, wherein at least one of the one or more apertures is covered by at least one of the inner face sheet or the outer face sheet.

The thrust chamber assembly of any preceding clause, wherein at least one of the one or more apertures extends from the inner surface to the outer surface.

The thrust chamber assembly of any preceding clause, wherein at least one of the one or more apertures comprises a loop.

A method of forming a thrust chamber assembly, comprising: forming a monolithic ceramic preform having at least one of a combustion chamber or a nozzle using an additive manufacturing process, the monolithic ceramic preform comprising an inner surface and an outer surface defining a wall of the monolithic ceramic preform, the monolithic ceramic preform having a first end and a second end, the monolithic ceramic preform having one or more apertures formed in the wall wherein at least one of the one or more apertures has an open end on at least one of the first end or the second end; applying an inner face sheet to the inner surface of the monolithic ceramic preform, the inner face sheet comprising a first quantity of ceramic matrix composite plies; applying an outer face sheet to the outer surface of the monolithic ceramic preform, the outer face sheet comprising a second quantity of ceramic matrix composite plies; and melt-infiltrating the monolithic ceramic preform together inner face sheet and the outer face sheet.

The method of forming the thrust chamber assembly of any preceding clause, further comprising using the monolithic ceramic preform as a mandrel for laying up the first quantity of ceramic matrix composite plies and the second quantity of ceramic matrix composite plies.

The method of forming the thrust chamber assembly of any preceding clause, wherein forming the monolithic ceramic preform comprises forming an annular monolithic ceramic preform.

The method of forming the thrust chamber assembly of any preceding clause, wherein applying the outer face sheet comprises applying a plurality of spaced apart face sheet bands.

The method of forming the thrust chamber assembly of any preceding clause, further comprising melt-infiltrating a silicon mixture into the monolithic ceramic preform prior to the application of the inner face sheet and the outer face sheet to the monolithic ceramic preform.

The method of forming the thrust chamber assembly of any preceding clause, further comprising forming the monolithic ceramic preform to include at least one of a converging portion or a diverging portion.

The method of forming the thrust chamber assembly of any preceding clause, further comprising orienting reinforcing fibers of the first quantity of ceramic matrix composite plies and the second quantity of ceramic matrix composite plies in an annular direction corresponding to an annular orientation of the inner face sheet and the outer face sheet.

The method of forming the thrust chamber assembly of any preceding clause, further comprising forming at least one of the one or more apertures to extend from the first end to the second end.

The method of forming the thrust chamber assembly of any preceding clause, further comprising forming at least one of the one or more apertures with a continuously varying cross-sectional geometry.

The method of forming the thrust chamber assembly of any preceding clause, further comprising forming at least one of the one or more apertures to intersect another of the one or more apertures.

The method of forming the thrust chamber assembly of any preceding clause, further comprising forming at least one of the one or more apertures to extend from the inner surface to the outer surface.

The method of forming the thrust chamber assembly of any preceding clause, further comprising forming at least one of the one or more apertures extending helically about the monolithic ceramic preform.

The method of forming the thrust chamber assembly of any preceding clause, further comprising forming at least one of the one or more apertures extending inwardly from at least one of the inner surface or the outer surface.

This written description uses examples to disclose the disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

While this disclosure has been described as having exemplary designs, the present disclosure can be further modified within the scope of this disclosure. This application is therefore intended to cover any variations, uses, or adaptations of the disclosure using its general principles. Further, this application is intended to cover such departures from the present disclosure as come within known or customary practice in the art to which this disclosure pertains and which fall within the limits of the appended claims.

## Claims

1. A ceramic composite tubular structure (10, 100, 200), comprising:
a monolithic ceramic preform (40, 140, 240) being tubular-shaped created using an additive manufacturing process, the monolithic ceramic preform (40, 140, 240) having a first end (24, 124, 224) and a second end (26, 126, 226), the monolithic ceramic preform (40, 140, 240) comprising an inner surface (42, 142, 242) and an outer surface (44, 144, 244) with one or more apertures (50, 150, 250) formed between the inner surface (42, 142, 242) and the outer surface (44, 144, 244), at least one of the one or more apertures (50, 150, 250) open to at least one of the first end (24, 124, 224) or the second end (26, 126, 226);
an inner face sheet (60, 160, 260) formed on the inner surface (42, 142, 242) of the monolithic ceramic preform (40, 140, 240), the inner face sheet (60, 160, 260) comprising a first quantity of ceramic matrix composite plies (64, 164, 264); and
an outer face sheet (62, 170, 262) formed on the outer surface (44, 144, 244) of the monolithic ceramic preform (40, 140, 240), the outer face sheet (62, 170, 262) comprising a second quantity of ceramic matrix composite plies (66, 182, 266).

2. The ceramic composite tubular structure (10, 100, 200) of claim 1, wherein at least one of the one or more apertures (50, 150, 250) comprises a continuously varying cross-sectional geometry over a length of the at least one of the one or more apertures (50, 150, 250).

3. The ceramic composite tubular structure (10, 100, 200) of any preceding claim, wherein the one or more apertures (50, 150, 250) comprises a first aperture (50, 150, 250) and a second aperture (50, 150, 250), wherein the first aperture (50, 150, 250) intersects the second aperture (50, 150, 250).

4. The ceramic composite tubular structure (10, 100, 200) of any preceding claim, wherein the monolithic ceramic preform (40, 140, 240) comprises at least one of a converging portion (20, 120, 220) or a diverging portion (22, 122, 222).

5. The ceramic composite tubular structure (10, 100, 200) of any preceding claim, wherein the outer face sheet (62, 170, 262) comprises a plurality of spaced apart face sheet bands (180).

6. The ceramic composite tubular structure (10, 100, 200) of any preceding claim, wherein a silicon mixture is melt-infiltrated into the monolithic ceramic preform (40, 140, 240), the inner face sheet (60, 160, 260), and the outer face sheet (62, 170, 262).

7. The ceramic composite tubular structure (10, 100, 200) of any preceding claim, wherein the one or more apertures (50, 150, 250) comprise a first aperture (50, 150, 250) and a second aperture (50, 150, 250), wherein the first aperture (50, 150, 250) comprises a cross sectional geometry different than a cross sectional geometry of the second aperture (50, 150, 250).

8. The ceramic composite tubular structure (10, 100, 200) of any preceding claim, wherein the one or more apertures (50, 150, 250) comprises at least one aperture (50, 150, 250) of the one or more apertures (50, 150, 250) as a closed aperture (50, 150, 250).

9. A method of forming a ceramic composite tubular structure (10, 100, 200), comprising:
forming a monolithic ceramic preform (40, 140, 240) being tubular-shaped using an additive manufacturing process, the monolithic ceramic preform (40, 140, 240) comprising a first end (24, 124, 224) and a second end (26, 126, 226), the monolithic ceramic preform (40, 140, 240) having an inner surface (42, 142, 242) and an outer surface (44, 144, 244) with one or more apertures (50, 150, 250) formed between the inner surface (42, 142, 242) and the outer surface (44, 144, 244), at least one of the one or more apertures (50, 150, 250) open to at least one of the first end (24, 124, 224) or the second end;
applying an inner face sheet (60, 160, 260) on the inner surface (42, 142, 242) of the monolithic ceramic preform (40, 140, 240), the inner face sheet (60, 160, 260) comprising a first quantity of ceramic matrix composite plies (64, 164, 264); and
applying an outer face sheet (62, 170, 262) on the outer surface (44, 144, 244) of the monolithic ceramic preform (40, 140, 240), the outer face sheet (62, 170, 262) comprising a second quantity of ceramic matrix composite plies (66, 182, 266).

10. The method of forming the ceramic composite tubular structure (10, 100, 200) of claim 9, further comprising using the monolithic ceramic preform (40, 140, 240) as a mandrel for laying up the first quantity of ceramic matrix composite plies (64, 164, 264) and the second quantity of ceramic matrix composite plies (66, 182, 266).

11. The method of forming the ceramic composite tubular structure (10, 100, 200) of claim 9 or 10, wherein forming the monolithic ceramic preform (40, 140, 240) comprises forming at least one of the one or more apertures (50, 150, 250) with a varying cross-sectional geometry.

12. The method of forming the ceramic composite tubular structure (10, 100, 200) of any of claims 9 to 11, wherein applying the outer face sheet (62, 170, 262) comprises applying a plurality of spaced apart face sheet bands (180).

13. The method of forming the ceramic composite tubular structure (10, 100, 200) of any of claims 9 to 12, further comprising melt infiltrating a silicon mixture into the monolithic ceramic preform (40, 140, 240), the inner face sheet (60, 160, 260), and the outer face sheet (62, 170, 262).

14. The method of forming the ceramic composite tubular structure (10, 100, 200) of any of claims 9 to 13, further comprising:
melt infiltrating a silicon mixture into the monolithic ceramic preform (40, 140, 240);
applying the first quantity of ceramic matrix composite plies (64, 164, 264) to the melt-infiltrated monolithic ceramic preform (40, 140, 240);
applying the second quantity of ceramic matrix composite plies (66, 182, 266) to the melt-infiltrated monolithic ceramic preform (40, 140, 240); and
melt infiltrating the silicon mixture into the melt-infiltrated monolithic ceramic preform (40, 140, 240) together with the first quantity of ceramic matrix composite plies (64, 164, 264) and the second quantity of ceramic matrix composite plies (66, 182, 266).

15. The method of forming the ceramic composite tubular structure of any of claims 9 to 14, further comprising forming the monolithic ceramic preform (40, 140, 240) comprising at least one of a converging portion (20, 120, 220) or a diverging portion (22, 122, 222).
